# EUROPÄISCHE PATENTANMELDUNG

(11) **EP 1 057 758 A1**
(43) Veröffentlichungstag der Anmeldung: **06.12.2000**
(21) Anmeldenummer: 00250158.3
(22) Anmeldetag: 22.05.2000
(51) Int. Cl.: B65G 47/57, B65G 47/61

(54) **Vertikalförderer nach dem Paternosterprinzip**

(30) Priorität: 02.06.1999 DE 19925857
(71) Anmelder: Atecs Mannesmann AG, 40213 Düsseldorf (DE)
(72) Erfinder: Maier, Michael, 70806 Kornwestheim (DE); Perrot, Tobias, 71155 Altdorf (DE); Arnold, Thomas, 70806 Kornwestheim (DE)
(74) Vertreter: Meissner, Peter E., Dipl.-Ing.

(57) **Zusammenfassung**

Die Erfindung betrifft einen Vertikalförderer nach dem Paternosterprinzip, bestehend aus mindestens einem in einem Rahmengestell auf einer geschlossenen Bahnen endlos umlaufendem Zugmittel, an dem mit dem Zugmittel umlaufende Trageinheiten für Stückgut um horizontale Achsen pendelnd aufgehängt sind. Dabei weist jede Trageinheit (3) zwei an einem Tragrahmen (5) angeordnete, sich horizontal erstreckende und parallel voneinander beabstandete Tragschienen (6) auf, auf denen das Stückgut (7) auflegbar ist. Mindestens ein Zu- und Abförderer (8, 9) für das Stückgut (7) wirkt mit dem Vertikalförderer (1) zusammen, dessen Übergabeende (10) zur Aufgabe oder Übernahme des Stückgutes (7) mindestens zeitweise in die Umlaufbahn der Trageinheiten (3) in den freien Raum zwischen die Tragschienen (6) für das Stückgut (7) bewegbar ist.

## Beschreibung

Die Erfindung betrifft einen Vertikalförderer nach dem Paternosterprinzip, bestehend aus mindestens einem, in einem Rahmengestell auf einer geschlossenen Bahn endlos umlaufenden Zugmittel, an dem mit dem Zugmittel umlaufende Trageinheiten für Stückgut um horizontale Achsen pendelnd aufgehängt sind.

Vertikalförderer dieser Art werden zum Transportieren von Stückgütern über vertikale Förderstrecken bzw. zum Ein- und Auslagern in Regallagern verwendet. Auch können derartige Vertikalförderer als Regallager selbst Verwendung finden, wie dies beispielsweise in der deutschen Patentanmeldung DE 44 35 854 A1 beschrieben ist. Während der Transport des Fördergutes aufgrund der bekannten ausgereiften Technik kein besonderes Problem darstellt, muß dem Ein- und Auslagern des zu transportierenden Gutes mehr Aufmerksamkeit zuteil werden. Das ist insbesondere dann der Fall, wenn die Aufgabe und Entnahme nicht wie beim Stand der Technik manuell, sondern weitgehend automatisiert erfolgen soll, wie das bei modernen Vertikaltransportsystemen der Fall ist.

Aufgabe der vorliegenden Erfindung ist es, ausgehend von einem Vertikalförderer nach dem Paternosterprinzip, diesen Förderer so zu gestalten, dass beim Fördern von Stückgut in mit dem endlosen Zugmittel laufenden Trageinheiten das Be- und Entladen der Trageinheiten vereinfacht wird und automatisch durchführbar ist.

Zur Lösung der Aufgabe wird erfindungsgemäß ein Vertikalförderer vorgeschlagen, der dadurch gekennzeichnet ist, dass jede Trageinheit zwei an einem Tragrahmen angeordnete, sich horizontal erstreckende und parallel voneinander beabstandete Tragschienen aufweist, auf denen das Stückgut auflegbar ist, und dass mindestens ein Zu- und Abförderer für das Stückgut mit dem Vertikalförderer zusammenwirkt, dessen Übergabeende zur Aufnahme oder Übernahme des Stückgutes mindestens zeitweise in die Umlaufbahn der Trageinheiten in den freien Raum zwischen die Tragschienen für das Stückgut bewegbar ist.

Ein wesentliches Merkmal des erfindungsgemäßen Vertikalförderers besteht in der Verwendung von Trageinheiten, die statt einer festen Bodenplattform zwei voneiander beabstandete Tragschienen enthalten, auf denen das Stückgut vorzugsweise im Kantenbereich ablegbar ist. Diese Tragschienen belassen einen freien Raum, in den das Übergabeende des Zu- und Abförderers eingreifen kann, während sich die Trageinheiten auf der geschlossenen Bahn bewegen.

In einer besonders günstigen Ausgestaltung der Erfindung ist vorgesehen, dass das Zugmittel aus zwei in einem Rahmengestell in voneinander beabstandeten parallelen Ebenen auf geschlossenen Bahnen endlos umlaufenden Ketten besteht, zwischen denen die Trageinheiten aufgehängt sind, die jeweils aus einem die Zugmittel verbindenden und daran angeschlagene Tragbalken für zwei sich nach unten erstreckende Tragarme besteht, an denen jeweils eine der beiden sich quer zu dem Tragbalken erstreckenden Tragschienen für das Stückgut angeordnet ist. Die Trageinheit ähnelt den in der gattungsbildenden DE 44 35 854 A1 bekannten Körben, wobei die Besonderheit darin besteht, dass die Tragschienen als Auflage für die Kantenbereiche des Stückgutes dienen, die Trageinheiten ansonsten nach unten offen sind.

Das Stückgut besteht vorzugsweise aus Behältern, Paletten oder stabilen Paketen, die insgesamt eine ausreichend feste seitliche Kante aufweisen müssen, damit diese auf die Tragschienen der Trageinheiten auflegbar sind.

In bekannter Weise sollten die Zu- und Abförderer mindestens Endbereiche aufweisen, die in den freien Raum zwischen die Tragschienen bewegbar sind.

Eine günstige Lösung ergibt sich, wenn nach einem besonderen Merkmal der Erfindung das Zugmittel zur Bildung eines Ein- und Auslagerungsbereiches für das Stückgut oberhalb des jeweiligen Zu- und Abförderers in einem ersten Abschnitt aus der Vertikalen heraus in den Bereich oberhalb des Übergabeendes des Zu- und Abförderers ausgelenkt wird, dann in einem anschließenden zweiten Abschnitt vertikal so geführt wird, dass die Tragschienen der Trageinheit beidseitig an dem Übergabeende des Zu- und Abförderers vorbeibewegbar sind und anschließend in einem dritten Abschnitt in die Ausgangsebene zurückgeführt und zurückgelenkt wird. Diese besondere erfindungsgemäße Lösung ermöglicht das Ein- und Auslagern bzw. das Zu- und Abfördern von Stückgut selbsttätig, indem die Trageinheiten durch den Endbereich des Zu- und Abförderers bewegbar sind. Auf diese Weise kann entweder eine beladene Trageinheit von oben auf den Zu- und Abförderer gesenkt werden, so dass die an dem Endbereich des Zu- und Abförderers vorbeibewegten Tragschienen ein Ablegen des Stückgutes auf dem Förderer bewirken, oder ein auf dem Endbereich des Förderers abgelegtes Stückgutteil kann durch die das Stückgut untergreifenden Tragschienen angehoben und abgefördert werden.

Wenn nach einem weiteren Merkmal der Erfindung vorgesehen ist, dass mindestens das Übergabeende des Zu- und Abförderers aus seiner Förderebene heraus in eine Position außerhalb der Umlaufbahn der Trageinheiten verschieb- oder verschwenkbar ist, so kann der vorstehend beschriebene Vertikalförderer auch zum alternativen Durchtransport des Stückgutes verwendet werden, wobei der Zu- und Abförderer in dieser Position außer Funktion bleibt.

Es hat sich gezeigt, dass die Auslenk- und/oder Rücklenkstrecke der Zugmittel mit den Trageinheiten aus der oder in die vertikale Umlaufbahn des Vertikalförderers vorzugsweise unter einem Winkel von 90° verläuft, so dass vor dem Absetzen oder Aufnehmen des Stückgutes von dem Zu- und Abförderer die Trageinheiten im wesentlichen horizontal bewegt werden. Auf diese Weise ist ein störungsfreies Zu- und Abführen der Trageinheiten in bezug auf den Zu- und Abförderer möglich, insbesondere ohne dass sich die aufeinanderfolgenden Trageinheiten behindern oder die Tragbalken der Trageinheiten mit dem Förderer kollidieren.

Am besten wird die Erfindung anhand eines Ausführungsbeispiels erläutert. Dieses ist in Zeichnungsfiguren dargestellt, die zeigen:
- Figur 1: eine perspektivische Ansicht eines Vertikalförderers mit angrenzenden Zu- und Abförderern,
- Figur 2: eine schematische Ansicht eines erfindungsgemäßen Vertikalförderers im Bereich der Zuförderbahn, und
- Figur 3: den erfindungsgemäßen Vertikalförderer im Bereich der Abförderbahn.

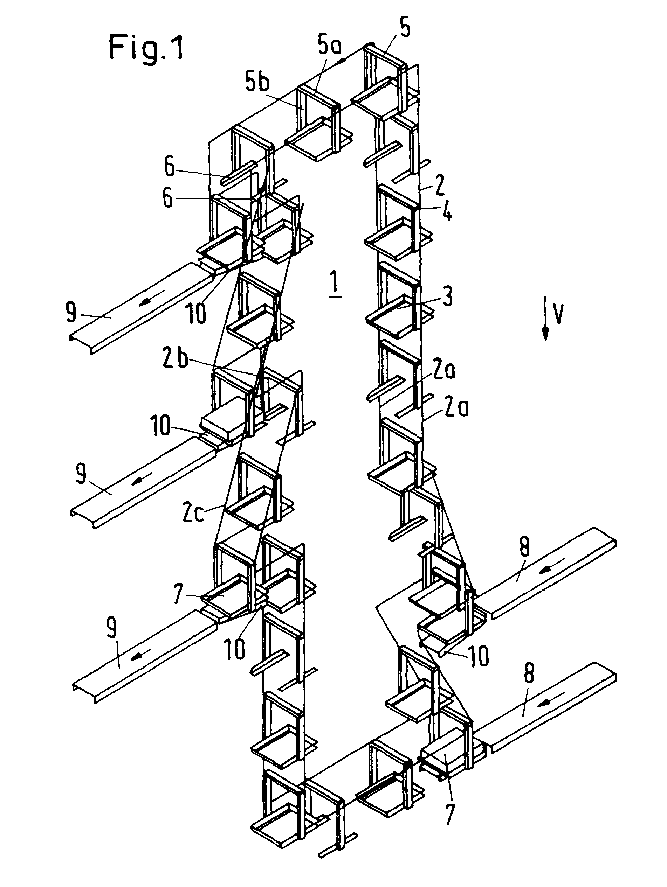

In Figur 1 ist der Vertikalförderer 1 nach dem Paternosterprinzip gezeigt. Er besteht im wesentlichen aus dem in einer geschlossenen Bahn endlos umlaufenden Zugmittel 2, an dem Trageinheiten 3 in Form von Gondeln aufgehängt sind. Das Zugmittel 2 besteht aus zwei parallel und mit Abstand nebeneinander angeordneten Ketten 2a, zwischen denen jeweils die Trageinheiten 3 um horizontale Achsen 4 schwenkbar pendelnd aufgehängt sind. Jede Trageinheit 3 besteht aus dem am Zugmittel 2 angeschlagenen Tragbalken 5a mit zwei sich nach unten erstreckenden Tragarmen 5b, aus denen sich der U-förmige Rahmen 5 aufbaut. Am Ende der Tragarme 5b sind jeweils mittig zwei horizontal und quer zu dem Tragbalken 5a sich erstreckende Tragschienen 6 angeordnet, die in besonders konstruktiv einfacher Ausführung als Winkelprofile ausgebildet sind. Der Abstand der beiden Tragschienen ist so gewählt, dass das zu fördernde Stückgut 7 in Form von Behältern, Paletten oder stabilen Paketen von oben auf die Tragschienen der Trageinheiten 3 aufgelegt werden kann, so dass die seitlichen Kanten des Stückgutes 7 aufliegen.

Aus Figur 1 ist weiterhin ersichtlich, dass das endlos umlaufende Zugmittel 2 in den Vertikalstrecken entgegen der von Paternostern bekannter Weise nicht ausschließlich in Vertikalrichtung linear geführt ist, sondern seitlich nach außen erstreckende Ein- und Auslagerungsbereich 2b aufweist. Die Länge jedes Ein- und Auslagerungsbereichs 2b ist so gewählt, dass das von den Trageinheiten 3 geförderte Stückgut 7 seitlich aus dem in Vertikalrichtung verlaufende Förderweg der Trageinheit 3 herausbewegt werden kann. Die Länge des Ein- und Auslagerungsbereichs 2b entspricht somit mindestens der Länge des Stückgutes 7. Am Ende des Ein- und Auslagerungsbereichs 2b schließt sich ein Rück- bzw. Zufördererabschnitt 2c an, an dessen Ende das Zugmittel 2 wieder in seine vertikal verlaufende Richtung ausgerichtet wird. In dem Rück- bzw. Zuförderungsabschnitt verläuft das Zugmittel in diesem Beispiel in einem Winkel von etwa 45°.

In dem Ausführungsbeispiel gemäß Figur 1 sind zwei an den Vertikalförderer 1 angrenzende Zuförderer 8 sowie drei ebenfalls an den Vertikalförderer angrenzende Abförderer 9 vorgesehen. Die Zuförderer 8 bzw. die Abförderer 9 grenzen jeweils im Ein- und Auslagerungsbereich 2b des Zugmittels 2 sowie unterhalb dieses Zugmittels an den Vertikalförderer an. Zur Aufnahme bzw. Übergabe des Stückgutes 7 von dem Zuförderer 8 bzw. an den Abförderer 9 sind an dessen Endbereichen jeweils sich in Förderrichtung anschließende Übergabeenden 10 an einem Übergabeförderer vorgesehen, auf die das Stückgut 7 über eine Absenkbewegung der Tragschienen 6 der Trageinheiten 3 auf die Abförderer 9 abgebbar bzw. umgekehrt von den Tragschienen 6 der Trageinheiten 3 im Bereich der Abförderer 9 von dem Übergabeende 10 anhebbar. Um eine derartige Übergabe des Stückgutes 7 zu ermöglichen, weist das Übergabeende 10 eine so geringe Breite auf, dass ein Eintauchen des Übergabeendes 10 zwischen die Tragschienen 6 bzw. in umgekehrter Reihenfolge ein Abtauchen erlaubt und gleichzeitig ein sicherer Transport des Stückgutes 7 möglich ist.

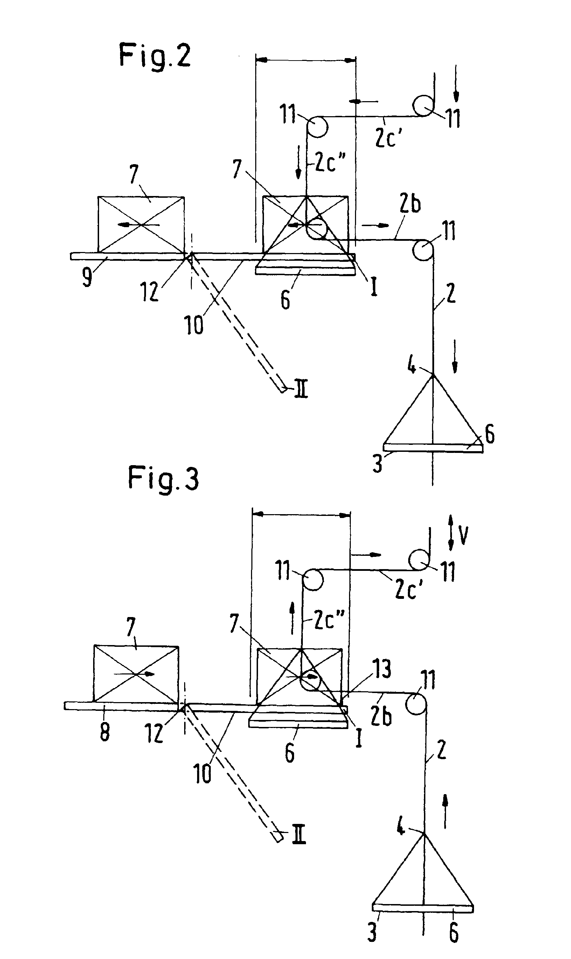

Anhand der Figur 2, die eine schematische Ausschnittsvergrößerung aus dem Bereich eines Auslagerungsabschnittes 2b eines Vertikalförderers 1 gemäß Figur 1 zeigt, wird nachfolgend ein Auslagerungsvorgang eines Stückgutes 7 in Form eines Paketes von einer Trageinheit 3 auf das Übergabeende 10 eines Übergabeförderers näher erläutert.

In Abwandlung des in Figur 1 dargestellten Verlaufs des Zugmittels 2 ist in Figur 2 der Zu- und Abförderabschnitt 2c durch einen horizontal verlaufenden Abschnitt 2c' und einen Vertikalabschnitt 2c" ausgeführt. Es ist ersichtlich, dass eine an dem Zugmittel 2 pendelnd aufgehängte Trageinheit 3 von oben von dem vertikalen Abschnitt ausgehend um eine erste Umlenkrolle 11 in Richtung des horizontalen Abschnittes 2c' umgelenkt wird und somit seitlich zur Vertikalrichtung V und nach außen verfährt. Anschließend ist ein zweites Umlenkrad 11 vorgesehen, durch das das Zugmittel 2 von dem horizontalen Abschnitt 2c' in den Vertikalabschnitt 2c" umgelenkt wird. Während des Durchlaufs des Zugmittels 2 mit der Trageinheit 3 durch den Vertikalabschnitt 2c" wird das Stückgut 7 auf das Übergabeende 10 des Übergabeförderers abgesenkt, der sich hierzu in einer angehobenen Betriebsstellung I befindet. Durch die Absenkbewegung der Trageinheit 3 wird das Stückgut 7 auf dem Übergabeende 10 abgestellt und die Tragschienen 6 werden - in Vertikalrichtung gesehen - jeweils seitlich neben dem Übergabeende 10 des Übergabeförderers vorbei weiter nach unten geführt, bis der Tragbalken 4 der Trageinheit 3 das dritte Umlenkrad 11 erreicht, um das das Zugmittel 2 von dem Vertikalabschnitt 2c" in Richtung des horizontal verlaufenden Ein- und Auslagerungsbereichs umgelenkt wird. Anschließend oder direkt nach dem Abstellen wird die Trageinheit 3 wiederum horizontal sowie seitlich nach innen gerichtet gefördert. Hierdurch wird die Trageinheit 3 von dem Übergabeende 10 wegbefördert. Anschließend kann von dem Übergabeende 10 des Übergabeförderers das Stückgut 7 auf den anschließenden Abführförderer 9 übergeben werden.

Aus Figur 2 ist ebenfalls ersichtlich, dass für den Fall, dass keine Übergabe des Stückgutes 7 auf den angrenzenden Abförderer 9 gewünscht ist, der Übergabeförderer mit dem Übergabeende 10 in eine abgesenkte Ruhestellung II bewegt werden kann. In dieser abgesenkten Ruhestellung II befindet sich das Übergabeende 10 außerhalb des Fahrweges der Trageinheit 3, so dass das Stückgut nicht von den Tragschienen 6 der Trageinheit 3 abgehoben wird.

Der Zuführvorgang des Stückgutes 7 von einem Zuförderer 8 ist in Figur 3 dargestellt und erfolgt in umgekehrter Weise. Auch hier können bei in Ruhestellung II befindlichem Übergabeende 10 Trageinheiten 3 mit darauf befindlichem Stückgut 7 an dem Übergabeende vorbei gefördert werden. Erst wenn das Stückgut 7 sich auf dem in der horizontalen Betriebsstellung I befindlichen Übergabeende ruht und dieser in Förderrichtung des Zuförderers 8 gesehen seitlich über diesen Förderer hinausragt, können die Tragschienen 6 der Trageinheit 3 das Stückgut während ihrer Aufwärtsbewegung vom Übergabeende 10 abheben.

Die zuvor beschriebenen Zuförderer 8, Abförderer 9 und Übergabeförderer können als Band-, Gurt- oder Rollenförderer ausgebildet werden. Der Übergabeförderer ist vorzugsweise an seinem dem Zuförderer 8 bzw. dem Abförderer 9 zugewandten Ende um eine horizontale und quer zur Förderrichtung des Zuförderers 8 und des Abförderers 9 ausgerichteten Schwenkachse 12 schwenkbar gelagert. Hierdurch ist es möglich, den Übergabeförderer aus einer horizontalen Betriebsstellung I in seine Ruhestellung II, die sich außerhalb des Fahrweges der Trageinheit 3 befindet, zu verschwenken. Es ist auch möglich, das Übergabeende teleskopierbar auszugestalten, d.h. in seiner Ruhestellung II befindet sich das Übergabeende 10 in einer in Richtung des Zuförderers 8 bzw. Abförderers 9 zurückgezogenen Stellung und zum Erreichen der Betriebsstellung I wird der Übergabeförderer in Richtung des Fahrweges der Trageinheit 3 ausgefahren. Auch ist es möglich, anstatt einer schwenkbaren Lagerung des Übergabeendes 10 dieses in Vertikalrichtung heb- und senkrecht auszugestalten.

Vorteilhafterweise kann mit einem derartig ausgebildeten Vertikalförderer 1 mit auf einer geschlossenen Bahn endlos umlaufende Trageinheiten 3, der sich durch die spezielle Führung des Zugmittels 2 im Bereich der Ein- und Auslagerung des Stückgutes 7 auszeichnet, im Zusammenspiel mit den in vertikale Richtung bewegbaren Übergabeenden eine besonders einfache Ein- und Auslagerung von Stückgut 7 in bzw. aus einem Vertikalförderer 1 erreicht werden und gleichzeitig ist auch ein Umlauf des in dem Vertikalförderer 1 befindlichen Stückgutes 7 ohne Ein- oder Auslagerung möglich.

### Bezugszeichenliste

- 1: Vertikalförderer
- 2: Zugmittel
- 2a: Kette
- 2b: Ein- und Auslagerungsbereich
- 2c: Rück- und Zuführabschnitt
- 2c': Horizontalabschnitt
- 2c": Vertikalabschnitt
- 3: Trageinheiten
- 4: horizontale Achse
- 5: Rahmen
- 5a: Tragbalken
- 5b: Tragarm
- 6: Tragschiene
- 7: Stückgut
- 8: Zuführförderer
- 9: Abführförderer
- 10: Übergabeende
- 11: Umlenkrolle
- 12: Schwenkachse
- I: Betriebsstellung
- II: Ruhestellung
- V: Vertikalrichtung

## Patentansprüche

1. Vertikalförderer nach dem Paternosterprinzip, bestehend aus mindestens einem in einem Rahmengestell auf einer geschlossenen Bahnen endlos umlaufendem Zugmittel, an dem mit dem Zugmittel umlaufende Trageinheiten für Stückgut um horizontale Achsen pendelnd aufgehängt sind,
dadurch gekennzeichnet,
dass jede Trageinheit (3) zwei an einem Tragrahmen (5) angeordnete, sich horizontal erstreckende und parallel voneinander beabstandete Tragschienen (6) aufweist, auf denen das Stückgut (7) auflegbar ist und dass mindestens ein Zu- und Abförderer (8, 9) für das Stückgut (7) mit dem Vertikalförderer (1) zusammenwirkt, dessen Übergabeende (10) zur Aufgabe oder Übernahme des Stückgutes (7) mindestens zeitweise in die Umlaufbahn der Trageinheiten (3) in den freien Raum zwischen die Tragschienen (6) für das Stückgut (7) bewegbar ist.

2. Vertikalförderer nach Anspruch 1,
dadurch gekennzeichnet,
dass das Zugmittel (2) aus zwei in einem Rahmengestell in voneinander beabstandeten parallelen Ebenen auf geschlossenen Bahnen endlos umlaufenden Ketten (2a) besteht, zwischen denen die Trageinheiten (3) aufgehängt sind, die jeweils aus einem die Zugmittel (2a) verbindenden und daran angeschlagenen Tragbalken (5a) für zwei sich nach unten erstreckende Tragarme (5b) besteht, an denen jeweils eine der beiden sich quer zu dem Tragbalken (5a) erstreckenden Tragschienen (6) für das Stückgut (7) angeordnet ist.

3. Vertikalförderer nach Anspruch 1 oder 2,
dadurch gekennzeichnet,
dass das Stückgut (7) aus Behältern, Paletten oder stabilen Paketen besteht, dessen seitliche Kanten auf die Tragschienen (6) der Trageinheiten (3) auflegbar ist.

4. Vertikalförderer nach einem der Ansprüche 1 bis 3,
dadurch gekennzeichnet,
dass das Zugmittel (2) zur Bildung eines Ein-und Auslagerungsbereiches (2b) für das Stückgut (7) oberhalb des jeweiligen Zu- und Abförderers (8, 9) in einem ersten Abschnitt (2c') aus der Vertikalen heraus in den Bereich oberhalb des Übergabeendes (10) des Zu- und Abförderers (8, 9) ausgelenkt wird, dann in einem anschließenden zweiten Abschnitt (2c") vertikal so geführt wird, dass die Tragschienen (6) der Trageinheit (3) beidseitig an dem Übergabeende (10) des Zu- und Abförderers (8, 9) vorbeibewegbar sind und anschließend in einem dritten Abschnitt in die Ausgangsebene zurückgeführt und zurückgelenkt wird.

5. Vertikalförderer nach einem der Ansprüche 1 bis 4,
dadurch gekennzeichnet,
dass mindestens das Übergabeende (10) des Zu- und Abförderer (8, 9) aus seiner Förderebene heraus in eine Position (II) außerhalb der Umlaufbahn der Trageinheiten verschieb- oder verschwenkbar ist.

6. Vertikalförderer nach einem der Ansprüche 1 bis 5,
dadurch gekennzeichnet,
dass der Ein-und Auslagerungsbereich (2b) der Zugmittel (2) mit den Trageinheiten (3) aus der und in die vertikale Umlaufbahn des Vertikalförderers (1) vorzugsweise unter einem Winkel von 90° verläuft.
